# EUROPEAN PATENT SPECIFICATION

(11) **EP 3 029 293 B1**
(45) Date of publication and mention of the grant of the patent: **26.04.2017**
(21) Application number: 15197344.3
(22) Date of filing: 01.12.2015
(51) Int. Cl.: B03C 3/41, B03C 3/49, F01N 9/00, F01N 3/01

(54) **EXHAUST GAS PURIFICATION APPARATUS**
ABGASREINIGUNGSVORRICHTUNG
APPAREIL DE PURIFICATION DES GAZ D'ÉCHAPPEMENT

(30) Priority: 02.12.2014 JP 2014244073
(43) Date of publication of application: 08.06.2016
(73) Proprietor: Toyota Jidosha Kabushiki Kaisha, Toyota-shi, Aichi-ken 471-8571 (JP)
(72) Inventor: SUGIMOTO, Kazuhiro, Aichi-ken, 471-8571 (JP); MIZUNO, Akira, Aichi, 441-8580 (JP); TAKASHIMA, Kazunori, Aichi, 441-8580 (JP)
(74) Representative: Smith, Samuel Leonard

(56) References cited:
- EP-A1- 1 703 540
- EP-A1- 2 085 582
- JP-A- 2009 112 916
- JP-A- 2012 170 869

## Description

### BACKGROUND OF THE INVENTION

### Field of the Invention

The present invention relates to an exhaust gas purification apparatus that treats particulate matter in a passage through which gas containing the particulate matter flows.

### Description of the Related Art

Japanese Patent Laid-Open No. 2009-112916 discloses an example of an exhaust gas purification apparatus configured to treat particulate matter (PM) contained in factory gas or exhaust gas from automobiles or machines (including internal combustion engines). The exhaust gas purification apparatus in Japanese Patent Laid-Open No. 2009-112916 has a tubular outer casing, a dust collecting filter apparatus including a dust collecting electrode and a dust collecting filter layer and arranged inside and along the outer casing, and a discharge electrode provided inside the dust collecting filter apparatus and arranged in a central portion of a passage for exhaust gas containing particulate matter. The discharge electrode has a main portion extending along a central axis of the outer casing and a plurality of protruding portions each protruding from the main portion in a direction orthogonal to the central axis of the outer casing. Furthermore, the dust collecting electrode is electrically conductive and is configured to contact ground via the outer casing. According to description in Japanese Patent Laid-Open No. 2009-112916, a high voltage is applied to the discharge electrode to cause corona discharge around the protruding portions of the discharge electrode. The corona discharge charges the particulate matter in the exhaust gas. The Coulomb force is exerted to allow the charged particulate matter to flow toward the dust collecting electrode, which lies opposite to the discharge electrode. As a result, ion wind is formed in a direction orthogonal to the flow direction of the exhaust gas, and the particulate matter is collected by the dust collecting filter apparatus. In an embodiment in Japanese Patent Laid-Open No. 2009-112916, the dust collecting apparatus is shaped like a bellows to increase the surface area of the dust collecting electrode, leading to a high collection rate for the particulate matter.

Furthermore, Japanese Patent Laid-Open No. 2009-127442 discloses an exhaust gas purification apparatus configured to collect and treat particulate matter contained in the exhaust gas. The exhaust gas purification apparatus in Japanese Patent Laid-Open No. 2009-127442 is configured similarly to the exhaust gas purification apparatus in Japanese Patent Laid-Open No. 2009-112916 except that the dust collecting filter apparatus is not shaped like a bellows. The exhaust gas purification apparatus in Japanese Patent Laid-Open No. 2009-127442 further includes a heater with an oxidation catalyst applied to a surface thereof. In the exhaust gas purification apparatus in Japanese Patent Laid-Open No. 2009-127442, the heater is activated to combust and remove PM collected by the dust collecting filter apparatus.

In the exhaust gas purification apparatus in Japanese Patent Laid-Open No. 2009-112916, when a collection amount of the particulate matter contained in the exhaust gas reaches a certain value or larger, the collected particulate matter needs to be evacuated out of the outer casing. Furthermore, in the exhaust gas purification apparatus in Japanese Patent Laid-Open No. 2009-127442, the heater needs to be activated in order to combust the particulate matter. The Japanese Patent Laid-Open No. 2012-170869 shows an electro static PM filter with a PM flow generating apparatus with two electrodes generating an ion wind from a central electrode towards the outer casing as second electrode and a PM treatment apparatus with a third electrode and a dielectric member generating ozone in order to oxidise PM.

An object of the present invention is to provide an exhaust gas purification apparatus that allows particulate matter to be treated using a novel configuration.

### SUMMARY OF THE INVENTION

According to an aspect of the present invention, an exhaust gas purification apparatus is provided in accordance with claim 1.

According to the above-described aspect of the present invention, the flow generating apparatus operates to allow the particulate matter to be directed toward and collected at the outer casing, and the treatment apparatus allows the oxidation promoting component to be generated outside the dielectric member in the outer casing when the voltage is applied to the first electrode of the discharge member. Therefore, the exhaust gas purification apparatus in the aspect of the present invention can exert an excellent effect in that the treatment apparatus allows the particulate matter to be oxidized by the action of the oxidation promoting component such as ozone or active oxygen.

Preferably, the outer casing is at least partly electrically conductive. In this case, the flow generating apparatus may be configured to cause a potential difference between the discharge electrode and the outer casing as a result of voltage application. Furthermore, when the outer casing is at least partly electrically conductive, the treatment apparatus may be configured to cause a potential difference between the first electrode and the outer casing as a result of voltage application. In such a case, the outer casing may be grounded.

The treatment apparatus includes a plurality of treatment sections, and each of the treatment sections includes at least one discharge member. The voltage application is performed on the discharge member in a first treatment section of the plurality of treatment sections while the voltage application is not performed on the discharge member in a second treatment section of the plurality of treatment sections.

Preferably, the discharge member includes a member with a moisture retaining function, outside the dielectric member. Additionally or alternatively, the discharge member may have a member with a PM capturing function, outside the dielectric member. The discharge member may include a fibrous member provided on an outer surface of the dielectric member. The fibrous member may have at least one of moisture retaining function and the PM capturing function. Preferably, the fibrous member has such directionality as to direct, in a predetermined direction, ion wind generated outside the dielectric member when the voltage is applied to the treatment apparatus.

Preferably, when the discharge member of the treatment apparatus includes a fibrous member provided on an outer surface of the dielectric member and the fibrous member has such directionality as to direct, in the predetermined direction, ion wind generated outside the dielectric member when the voltage is applied to the treatment apparatus, the fibrous member of the first treatment section is configured so as to at least direct the ion wind toward the second treatment section adjacent side to the first treatment section as a result of voltage application in the first treatment section, while the fibrous member of the second treatment section is configured so as to at least direct the ion wind toward the first treatment section side as a result of voltage application in the second treatment section.

A control unit that controls the voltage application in the treatment apparatus may perform the voltage application when desired. The control unit of the treatment apparatus may include an estimation unit that estimates the amount of particulate matter collected inside the outer casing by action of the flow generating apparatus and an execution unit that performs the voltage application when the amount of particulate matter estimated by the estimation unit exceeds a threshold. Preferably, the exhaust gas purification apparatus is applied to an internal combustion engine. In this case, the control unit may perform the voltage application when exhaust gas has a flow velocity lower than a predetermined flow velocity and when the particulate matter in the exhaust gas has a concentration lower than a predetermined concentration.

Further features of the present invention will become apparent from the following description of exemplary embodiments (with reference to the attached drawings).

### BRIEF DESCRIPTION OF THE DRAWINGS

Fig. 1 is a schematic diagram of an exhaust gas purification apparatus according to a first embodiment of the present invention;
Fig. 2 is a schematic diagram of a treatment apparatus in the exhaust gas purification apparatus in Fig. 1;
Fig. 3 is a is a schematic sectional view of a part of the treatment apparatus taken along line III-III in Fig. 2;
Fig. 4A is a schematic sectional view of one discharge member in Fig. 3 and a periphery of the discharge member;
Fig. 4B is a diagram schematically illustrating that moisture is retained around the discharge member in Fig. 4A;
Fig. 5A is a conceptual drawing depicting a variation of a treatment section of the treatment apparatus in the first embodiment, which depicts a first variation;
[0020] Fig. 5B is a conceptual drawing depicting a variation of a treatment section of the treatment apparatus in the first embodiment, which depicts a second variation;
Fig. 6 is a schematic diagram of an exhaust gas purification apparatus according to a second embodiment of the present invention that is applied to an internal combustion engine;
Fig. 7 is a graph conceptually illustrating changes in PM accumulation amount;
Fig. 8 is a flowchart for voltage application control for a treatment apparatus in the second embodiment; and
Fig. 9 is a flowchart for switching control for a switching apparatus in the second embodiment.

### DESCRIPTION OF THE EMBODIMENTS

Embodiments of the present invention will be described below based on the attached drawings.

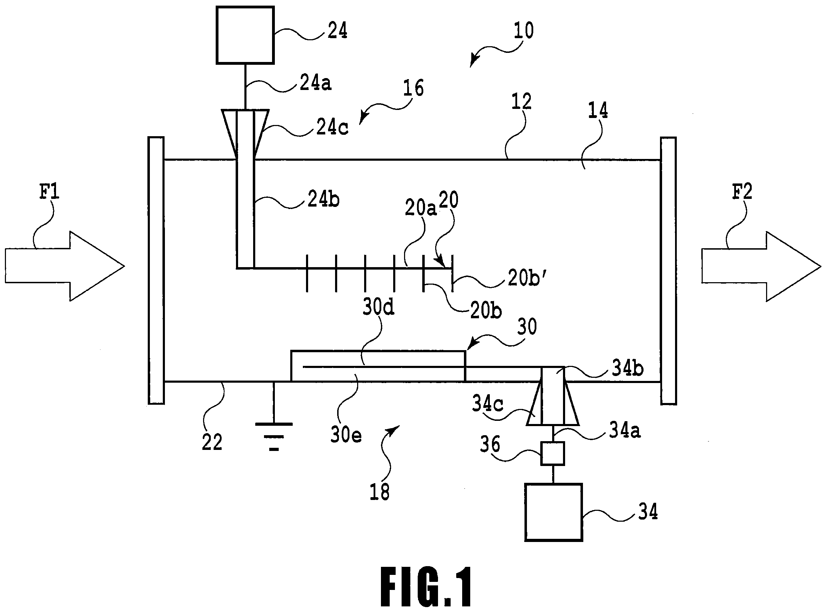

First, an exhaust gas purification apparatus 10 according to a first embodiment of the present invention will be described. Fig. 1, is a schematic sectional view of the exhaust gas purification apparatus 10 according to the first embodiment of the present invention. The exhaust gas purification apparatus 10 is applied to an exhaust gas treatment in a factory facility. A left side in Fig. 1 is an upstream side in a flow direction of exhaust gas. A right side in Fig. 1 is a downstream side in the flow direction of the exhaust gas. The flow of the exhaust gas is illustrated by arrows F1, F2 in Fig. 1.

In Fig. 1, the exhaust gas purification apparatus 10 is applied to an exhaust passage 14 that is defined by a tubular outer casing 12 and that serves as a passage through which the exhaust gas flows. The exhaust gas can flow through the exhaust passage 14. The exhaust gas may contain particulate matter (hereinafter referred to as PM). A flow generating apparatus 16 and a treatment apparatus 18 are provided in the exhaust passage 14.

The flow generating apparatus 16 is provided to collect PM from the exhaust gas and may thus be referred to as a collection apparatus. The flow generating apparatus 16 includes a discharge electrode 20. The discharge electrode 20 has, in this case, a main portion 20a arranged to extend along a longitudinal direction of the exhaust passage 14 and a plurality of discharge protruding portions 20b each protruding so as to extend in a radial direction (a direction orthogonal to the longitudinal direction of the exhaust passage) from the main portion 20a. As depicted in Fig. 1, the plurality of discharge protruding portions 20b is provided at substantially regular intervals along an axial direction of the main portion 20a from the upstream side to the downstream side in the flow direction of the exhaust gas. Furthermore, at the same position along the axial direction of the main portion 20a, a plurality of (in this case, three) protruding portions 20b is provided at substantially regular intervals (in this case, at intervals of approximately 120°). The number of protruding portions 20b at the same position along the axial direction of the main portion 20a may be one, two, or more than three (for example, four). For example, with four protruding portions 20b at the same position along the axial direction of the main portion 20a, the protruding portions 20b are arranged at approximately 90° intervals around the main portion 20a and extend substantially in the radial direction.

As an electrode 22 paired with the discharge electrode 20, the flow generating apparatus 16 includes, in this case, the outer casing 12 serving as an exhaust pipe. The outer casing 12 is electrically conductive and functions as the electrode 22. In this case, the outer casing 12 is wholly generally conductive and may function as the electrode 22. However, it is also preferable that only a part of the outer casing 12 is electrically conductive. Preferably, at least a part of the outer casing 12 is electrically conductive, and the conductive portion is located at a position to which tips of the protruding portions 20b of the discharge electrode 20 are directed. When only a part of the outer casing 12 is made electrically conductive so as to serve as the electrode 22, the part corresponding to the electrode 22 may be positioned at least in a lower portion of the outer casing 12 in a vertical direction.

The flow generating apparatus 16 further has a first voltage generating apparatus 24 to apply a voltage between the discharge electrode 20 and the outer casing 12. The first voltage generating apparatus 24 is configured to generate a DC voltage. The magnitude of the voltage is experimentally determined. For example, the voltage generated by the first voltage generating apparatus 24 may be set to negatively charge the PM in the exhaust gas and may be 7.5 kV or more in magnitude (in other words, preferably -7.5 V or less). However, the present invention is not limited to this range.

The first voltage generating apparatus 24 is connected to the discharge electrode 20 via a lead wire 24a and is, on the other hand, grounded (this is not depicted in the drawings). An insulator 24b is provided around the lead wire 24a. In Fig. 1, the insulator 24b is fixed to the outer casing 12 via a silicone cap 24c. However, the insulator 24b may be fixed using various insulating members other than the silicone cap. Furthermore, the insulator 24b is formed of ceramic or glass and may be formed of various insulating materials.

While the first voltage generating apparatus 24 is grounded, the outer casing 12 is grounded. Therefore, the first voltage generating apparatus 24 applies a high voltage to allow a potential difference to be reliably caused between the discharge electrode 20 and the outer casing 12. The electrode 22 may be provided between the discharge electrode 20 and the outer casing 12 (in contact with an inner surface of the outer casing 12 or away from the outer casing 12). In this case, one connection portion of the first voltage generating apparatus 24 may be connected to the electrode 22 or may be grounded as described above.

The treatment apparatus 18 is configured to treat PM having reached the treatment apparatus 18. In this case, the treatment apparatus 18 is provided for a lower portion of the outer casing 12 in the vertical direction. The treatment apparatus 18 is provided to cover at least an area in which the above-described plurality of protruding portions 20b is arranged, in the longitudinal direction of the exhaust passage 14. The PM reaching the treatment apparatus 18 may tend to be swept downstream under the effect of the flow of the exhaust gas, and thus, the treatment apparatus 18 may extend downstream with respect to the most downstream protruding portion 20b'.

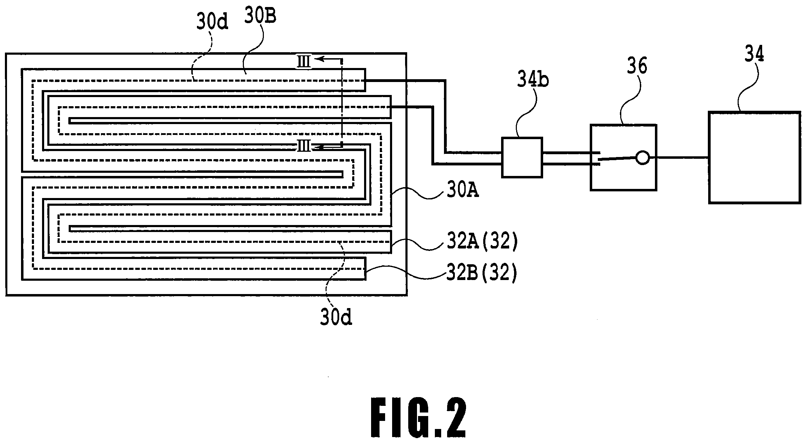

Fig. 2 is a schematic diagram of the treatment apparatus 18. Fig. 2 is a diagram schematically illustrating the treatment section 32 of the treatment apparatus 18 in Fig. 1 as viewed from above in the vertical direction. The first treatment section 32A is expressed as one bent band-like portion in Fig. 2. The second treatment section 32B is also expressed as one bent band-like portion in Fig. 2. The first treatment section 32A and the second treatment section 32B are shaped to be interlocked or fitted together but do not overlap each other. The treatment apparatus 18 has a discharge member 30. The treatment apparatus 18 also has two treatment sections 32A, 32B. The first treatment section 32A, one of the two treatment sections, is arranged adjacently to the second treatment section 32B, the other treatment section.

The first treatment section 32A and the second treatment section 32B are each provided with a discharge member 30. In this case, each of the treatment sections 32A, 32B substantially includes the discharge member 30 and a part of the outer casing 12, which are arranged in the exhaust passage 14. The discharge member 30 of the first treatment section 32A has, in the present embodiment, the same configuration as that of the discharge member 30 of the second treatment section 32B. However, the discharge members 30 may have different configurations.

The discharge member 30 is elongate, has a generally circular section, and is, in the present embodiment, arranged or configured to be folded. The discharge member 30 includes a central electrode 30d serving as a first electrode and a dielectric member 30e covering the central electrode 30d. The central electrode 30d extends along a central axis of the discharge member 30, is a conductive member, and is joined to a second voltage generating apparatus 34 provided separately from the first voltage generating apparatus 24. The dielectric member 30e is, in this case, ceramic, and behaves as an insulator while a voltage described below is not applied. In this case, the discharge member 30 has a generally circular section as described above, and the central electrode 30d extends substantially in the center of the dielectric member 30e. In the first embodiment, the discharge member 30 is arranged such that an axial direction of the central electrode 30d is substantially parallel to the longitudinal direction of the exhaust passage 14, except for folded portions in Fig. 2.

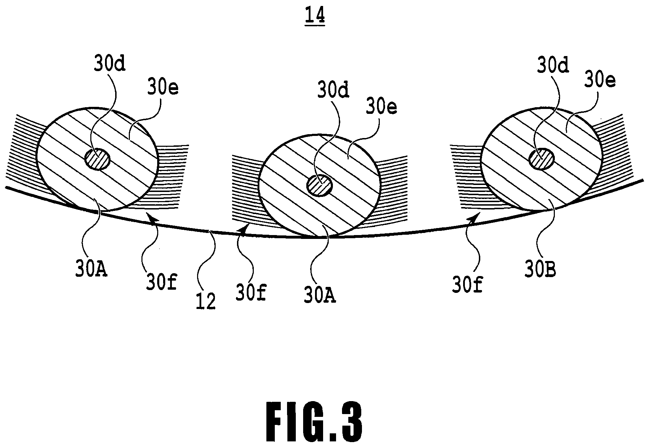

A schematic sectional view of the treatment apparatus 18 is depicted in Fig. 3. Fig. 3 is a schematic sectional view of the first treatment section 32A and the second treatment section 32B taken along line III-III in Fig. 2. Fig. 3 includes one section of the discharge member 30B of the second treatment section 32B, located on an upper side in Fig. 2, and two sections of the discharge member 30A of the first treatment section 32A.

In addition to the central electrode 30d and the dielectric member 30e, the discharge member 30 (30A, 30B) further includes a fibrous member 30f outside the dielectric member 30e. The fibrous member 30f has a plurality of fibers. Each of the fibers is a ceramic whisker, and is, in this case, a SiC whisker. However, the fiber may be formed of another material. The fibrous member 30f has a moisture retaining function and may function as a moisture retaining function section. Furthermore, the fibrous member 30f has a PM capturing function to capture PM having reached the fibrous member 30f, and may also function as a PM capturing function section. The fibrous member 30f may be formed using various fibers as materials and is made of a material that withstands the temperature and gas components of exhaust gas that may flow in the outer casing 12. This also applies to the other components of the discharge member 30 and to the discharge electrode 20.

The fibrous member 30f may be oriented and attached to a surface (outer surface) of the dielectric member 30e with the central electrode 30d using what is called an electrostatic flocking apparatus. Although not depicted in the drawings, fibers to be attached are placed on an electrode board, and a high voltage is applied between an object (in other words, the dielectric member 30e) and the electrode board. Thus, an electrostatic attraction force is exerted to cause the fibers to fly and to attach the fibers onto the object coated with an adhesive. Thus, the fibers can be attached to the surface of the dielectric member 30e with a certain degree of directionality exhibited, thus forming a fibrous member 30f. Fig. 3 schematically depicts the fibrous member 30f formed with a certain degree of directionality exhibited. The fibrous member may be provided using any other method. For example, a method may be adopted in which one or more fibers are manually or mechanically implanted at a predetermined position at a time.

In the discharge member 30 configured as described above, the dielectric member 30e is arranged in contact with an inner surface of the outer casing 12. The outer casing 12 is electrically conductive as described above and serves as a second electrode (paired with a first electrode) of the treatment apparatus 18. In this manner, the outer casing 12 serving as the second electrode of the treatment apparatus 18 is arranged with respect to the central electrode 30d, which is the first electrode, via the dielectric member 30e. In the present embodiment, the electrode 22 of the flow generating apparatus 16 is also the second electrode of the treatment apparatus 18. However, these electrodes may be independent of each other.

The treatment apparatus 18 has the second voltage generating apparatus 34. As depicted in Figs. 1 and 2, the second voltage generating apparatus 34 is connected to the central electrode 30d via a lead wire 34a. An insulator 34b is provided around the lead wire 34a. In Fig. 1, the insulator 34b is fixed to the outer casing 12 via a silicone cap 34c. However, the insulator 34b may be fixed using various insulating members other than the silicone cap. Furthermore, the insulator 34b is formed of ceramic or glass and may be formed of various insulating materials.

The second voltage generating apparatus 34 is, in this case, configured to generate an AC voltage. The magnitude of the voltage is experimentally determined. For example, the voltage generated by the second voltage generating apparatus 34 is, in the case of AC voltage, approximately 12 kV and has a frequency of 1 kHz. However, the present invention is not limited to this range. Furthermore, the voltage generating apparatus 34 is configured to selectively connect to the discharge member 30A of the first treatment section 32A and the discharge member 30B of the second treatment section 32B. In particular, as schematically depicted in Fig. 2, the discharge member 30A of the first treatment section 32A and the discharge member 30B of the second treatment section 32B are selectively connected to the second voltage generating apparatus 34 by using a switching apparatus 36 to switch the connection. While the discharge member 30A of the first treatment section 32A is connected to the second voltage generating apparatus 34, a voltage can be applied to the discharge member 30A. Similarly, while the discharge member 30B of the second treatment section 32B is connected to the second voltage generating apparatus 34, a voltage can be applied to the discharge member 30B. The second voltage generating apparatus 34 may be configured to generate a pulse direct-current voltage.

The second voltage generating apparatus 34 is connected to the central electrode 30d of the discharge member 30 and is, on the other hand, grounded (this is not depicted in the drawings). Furthermore, as described above, the outer casing 12 is grounded. Therefore, the second voltage generating apparatus 34 applies a voltage to allow a potential difference to be caused between the central electrode 30d of the discharge member 30 and the outer casing 12. The second electrode may be provided between the dielectric member 30e of the discharge member 30 and the outer casing 12 (in contact with the inner surface of the outer casing 12 or away from the outer casing 12). In this case, one connection portion of the second voltage generating apparatus 34 may be connected to the second electrode or may be grounded as described above.

Effects of the exhaust gas purification apparatus 10 configured as described above will be described below.

While exhaust gas containing PM is flowing through the exhaust passage 14 in the outer casing 12, the flow generating apparatus 16 applies a high voltage from the first voltage generating apparatus 24 to the discharge electrode 20. Thus, ions are ejected from the discharge electrode 20 preferably through the protruding portions 20b toward the outer casing 12 to negatively charge the PM. Then, ion wind (not depicted in the drawings) is induced by the ions, leading to a flow from the discharge electrode 20 toward the outer casing 12. Thus, most of the PM contained in the exhaust gas is guided toward an outer periphery of the exhaust passage 14 in the radial direction, in other words, toward the outer casing 12. Preferably, most of the PM from the exhaust gas is collected on inner surface of the outer casing 12. This principle is as disclosed in Japanese Patent Laid-Open No. 2009-112916 and Japanese Patent Laid-Open No. 2009-127442.

The thus collected PM preferably reaches the treatment sections 32A, 32B of the treatment apparatus 18. A portion of the PM may be guided to the lower treatment section in the vertical direction under the effect of gravity. Furthermore, a portion of the PM is captured or retained by the fibrous member 30f.

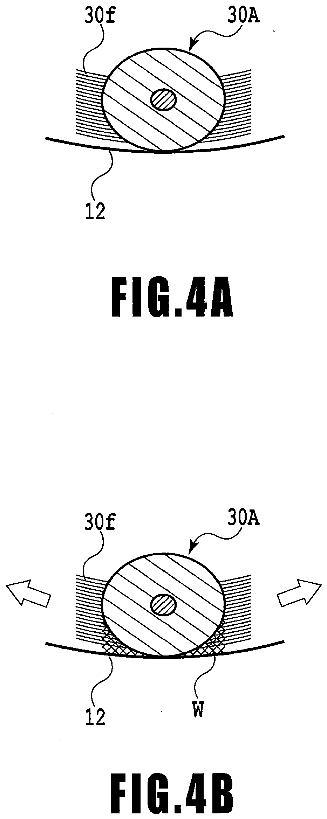

On the other hand, the exhaust gas contains moisture (resulting from combustion of fuel or the like). The moisture is retained by the fibrous member 30f due to a capillary phenomenon and may spread over a surface of the dielectric member 30e. Now reference is made to Figs. 4A and 4B depicting one of three sections of the two discharge members 30A, 30B in Fig. 3 (particularly one section of the discharge member 30A of the first treatment section 32A). Fig. 4A depicts one section of the discharge member 30A of the first treatment section 32A. Fig. 4B schematically illustrates that moisture is present around the discharge member 30A. Fig. 4B conceptually illustrates a moisture present area W.

As described above, the discharge member 30A of the first treatment section 32A and the discharge member 30B of the second treatment section 32B can be selectively connected to the second voltage generating apparatus 34. Here, assuming that the discharge member 30A of the first treatment section 32A is connected to the second voltage generating apparatus 34. In this regard, an AC high voltage is applied to the discharge member 30A of the first treatment section 32A to cause a discharge phenomenon between the discharge member 30A and the outer casing 12, particularly near a contact portion between the dielectric member 30e and the outer casing 12. In this regard, as described above, since moisture is present around the dielectric member 30e, the discharge phenomenon may occur not only near the contact portion between the dielectric member 30e and the outer casing 12 but also over a wider range along the moisture present area W. In other words, the moisture may cause the discharge area to be enlarged. This discharge action causes ozone or active oxygen to be generated over a wide range around the dielectric member 30e in the outer casing 12. The ozone or active oxygen is an oxidation promoting component that promotes oxidation, and promotes oxidation of PM (including combustion). Therefore, the PM can be oxidized (combusted).

Moreover, in such discharge, an ion flow occurs, and as schematically depicted by arrows in Fig. 4B, an ion flow away from the discharge member 30A may occur. In the present embodiment, since the discharge member is provided with the fibrous member 30f, an ion flow is likely to occur in a direction along the fibrous member. In other words, as depicted in Fig. 4B, an ion flow is likely to occur along the inner surface of the outer casing 12, and a portion of the PM may be floated again on such an ion flow without being sufficiently oxidized. In the treatment apparatus 18, the second treatment section 32B is arranged adjacently to the first treatment section 32A as depicted in Fig. 2. At least some of the fibers of the fibrous member 30f of the discharge member 30 in one of the treatment sections are oriented toward the adjacent treatment section. Therefore, the PM flying on the ion flow resulting from the voltage application in the first treatment section 32A is likely to reach the second treatment section 32B.

Thus, after the first treatment section performs the voltage application for a predetermined time, the switching apparatus 36 disconnects the first treatment section and switches the connection to connect the discharge member of the second treatment section to the second voltage generating apparatus 34. This allows the second treatment section can promote the oxidation treatment of the PM. The treatment in the second treatment section at this time may involve, as a treatment target, PM flying from the exhaust gas directly to the second treatment section and PM reaching and temporarily lying in the first treatment section and then flying to the second treatment section as a result of the treatment in the first treatment section.

In the present embodiment, a control mechanism for a control unit of the switching apparatus is designed to alternately switch between the connection of the first treatment section 32A to the second voltage generating apparatus 34 and the connection of the second treatment section 32B to the second voltage generating apparatus 34 before application of the voltage. Consequently, collected PM can be treated in stages in the first and second treatment sections. In addition, since the treatment sections 32A, 32B of the treatment apparatus 18 are positioned on the lower side in the vertical direction, PM not having been delivered to the treatment apparatus 18 simply by the collection action of the flow generating apparatus 16 (in other words, a PM collecting apparatus) may be delivered to the treatment sections 32A, 32B by the action of gravity, for example, in an environment where no exhaust gas flows. Therefore, the PM can be oxidized by the above-described subsequent operation of the treatment apparatus 18.

Furthermore, when the plurality of treatment sections is thus provided and switched for operation, the flow generating apparatus 16 can continue collecting PM by using a part of the outer casing for the inactive treatment section as a collecting electrode. Therefore, collection of PM in the flow generating apparatus 16 and treatment of PM in the treatment apparatus 18 can be performed in parallel.

The switching apparatus 36 in the first embodiment is configured to automatically switch between connection to the first treatment section and connection to the second treatment section at predetermined time intervals. However, the control unit of the switching apparatus 36 may be configured to switch between the connections at desired timing.

Moreover, in the first embodiment, the first voltage generating apparatus 24 constantly operates while the exhaust gas is flowing. However, a control unit for the first voltage generating apparatus 24 may be provided to allow the first voltage generating apparatus 24 to operate only as desired. This also applies to the above-described second voltage generating apparatus 34.

The first embodiment of the present invention has been described, but various changes may be made to the first embodiment. For example, in the first embodiment, the fibrous member 30f is provided such that the fibers extend from a part of the circumference of the dielectric member 30e only in a direction substantially parallel to the inner surface of the outer casing 12 as depicted in Fig. 3. However, the fibrous member 30f may be provided approximately all along the circumference of the dielectric member 30e surrounding the central electrode 30d so as to generally cover the central electrode 30d. However, preferably, a part of the dielectric member 30e is in direct contact with the outer casing 12, which serves as an electrode. The fibrous member 30f is preferably provided so as to stand substantially upright from the dielectric member 30e as depicted in Fig. 3. However, for example, the fibrous member 30f may perform the moisture retaining function with no predetermined directionality exhibited, like a nonwoven cloth. Furthermore, the fibrous member 30f may be replaced with a mesh-like member. The mesh-like member may be configured to perform the moisture retaining function and additionally or alternatively to orient the flow of ions in a predetermined direction.

Moreover, in the first embodiment of the present invention, the treatment apparatus 18 has two treatment sections. However, it is also preferable that the treatment apparatus 18 have only one treatment section or three or more treatment sections. When the treatment apparatus has a plurality of treatment sections, a voltage application period may vary among the treatment sections. In other words, as described above, the voltage application may be performed on the discharge member in the first treatment section of the plurality of treatment sections while the voltage application is not executed on the discharge member in the second treatment section of the plurality of treatment sections. Thus, even PM ej ected by an ion flow occurring in one of the treatment sections can be suitably captured and treated in another treatment section.

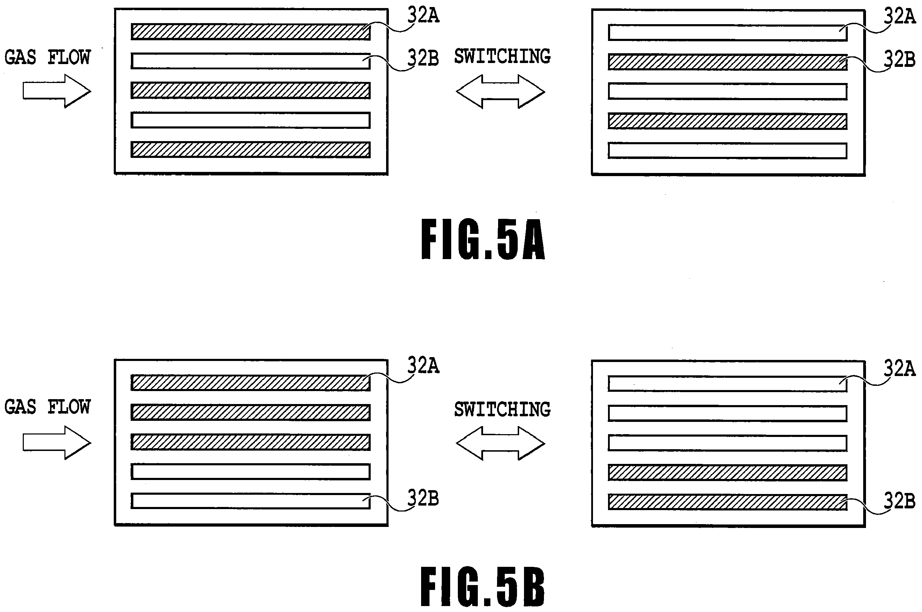

Moreover, in the above-described treatment apparatus, the first treatment section 30A and the second treatment section 30B are shaped so as to be interlocked together. However, the first treatment section 30A and the second treatment section 30B may be arranged in another form. For example, as depicted in Fig. 5A, the first treatment section 32A may include a plurality of discharge members and thus a plurality of portions, the second treatment section 32B may include a plurality of discharge members and thus a plurality of portions, and these portions may be alternately arranged on the inner surface of the outer casing 12 in a circumferential direction. Furthermore, as depicted in Fig. 5B, the plurality of discharge members of the first treatment section 32A may be collectively arranged adjacently to the plurality of discharge members of the second treatment section 32B. In Figs. 5A and 5B, hatching indicates that a voltage is being applied.

The exhaust gas purification apparatus 10 in the first embodiment of the present invention is applied to exhaust gas purification for factories. However, the exhaust gas purification apparatus 10 may be used for exhaust gas purification for various automobiles, machines, tunnels, and the like. In particular, the exhaust gas purification apparatus 10 may be used for exhaust gas treatment for internal combustion engines. An example where the exhaust gas purification apparatus 10 is applied to an internal combustion engine will be described as a second embodiment. Changes made to the exhaust gas purification apparatus 10 in the first embodiment as described above may also be applied to the exhaust gas purification apparatus in the second embodiment.

Now, the second embodiment of the present invention will be described. An exhaust gas purification apparatus 110 in the second embodiment has substantially the same configuration as that of the exhaust gas purification apparatus 10 in the above-described first embodiment but further includes a control unit that controls voltage application by each of the first and second voltage generating apparatus 24, 34. Thus, mainly differences of the second embodiment from the first embodiment will be described below. Components that are the same as (or equivalent to) the described components are denoted by reference numerals used above and will not be described below in further detail.

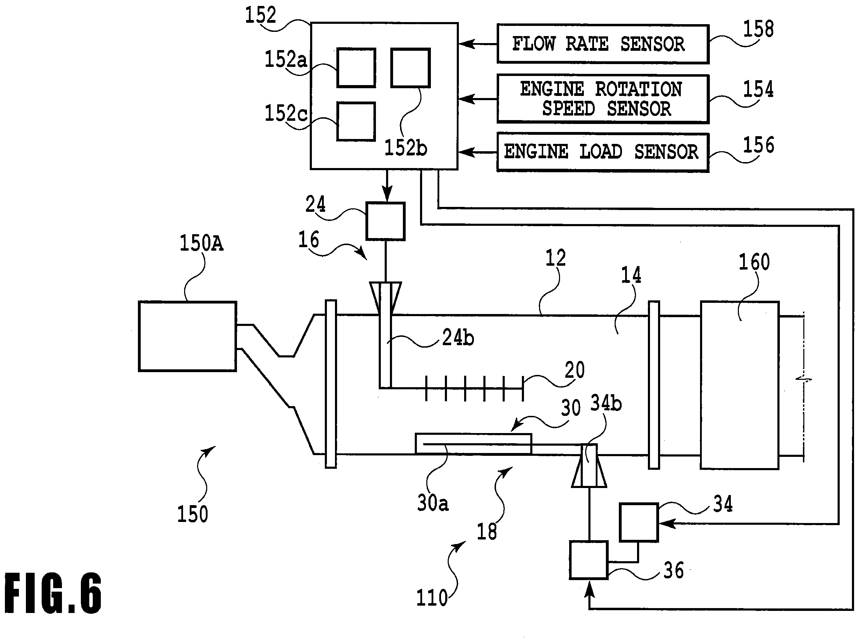

As depicted in Fig. 6, the exhaust gas purification apparatus 110 is applied to the exhaust passage 14 connected to a main body 150A of an internal combustion engine (hereinafter referred to as an engine) 150. The exhaust passage 14 is defined by an exhaust pipe serving as the outer casing 12. The exhaust pipe 12 is formed of a conductive material. The engine 150 may be a spark ignition internal combustion engine but in this case, is a compression ignition internal combustion engine (in other words, a diesel engine). In the exhaust gas purification apparatus 110 in the second embodiment, four protruding portions of the discharge electrode 20 of the flow generating apparatus 16 are arranged at the same position in the flow direction at intervals of 90°. However, this may be changed as described above in the first embodiment.

The engine 150 has a control apparatus 152. The control apparatus 152 is what is called an electronic control unit (ECU) to which various sensors are connected. The control apparatus 152 is substantially configured using a computer including an arithmetic processing unit (for example, a CPU), a storage apparatus (for example, a ROM, a RAM), an A/D converter, an input interface, and an output interface. The various sensors are electrically connected to the input interface. The control apparatus 152 electrically outputs operation signals or driving signals through the output interface so as to smoothly operate the engine 150 in accordance with a preset program and the like, based on signals from the various sensors. Thus, the control apparatus 152 controls operation of a fuel injection valve not depicted in the drawings, operation of the first voltage generating apparatus 24, operation of the second voltage generating apparatus 34, operation of the switching apparatus 36, and the like.

Several of the sensors will be specifically described. An engine rotation speed sensor 154 is provided to detect an engine rotation speed. Furthermore, an engine load sensor 156 is provided to detect an engine load. The following is available as the engine load sensor 156: a throttle opening sensor, an accelerator operation amount sensor, an airflow meter, or an intake pressure sensor. Moreover, a flow rate sensor 158 is provided to detect the flow rate of the exhaust gas in the exhaust passage 14, in other words, the flow velocity of the exhaust gas. As the flow rate sensor 158, an airflow meter provided in an intake passage is available.

In the engine 150, in principle, the flow generating apparatus 16 constantly applies a voltage to the discharge electrode 20 from the start until the stoppage of the engine 150. The voltage application is performed by the control unit 152a of the control apparatus 152 controlling the first voltage generating apparatus 24. Thus, the PM in the exhaust gas is directed toward the inner surface of the exhaust pipe 12 and for example can reach the treatment apparatus 18 directly or along the inner surface of the exhaust pipe 12.

On the other hand, in the exhaust passage 14, an oxidation apparatus (including an oxidation catalyst) 160 is arranged downstream of the exhaust gas purification apparatus 110. The oxidation apparatus 160 enables the PM to be oxidized and combusted when the exhaust gas is at a predetermined temperature or higher. Thus, when an operating state detected based on outputs from the engine rotation speed sensor 154 and the engine load sensor 156 is a state where exhaust gas with high temperature can be generated, the control unit 152a of the flow generating apparatus 16 stops the voltage application to the discharge electrode 20. In a predetermined operating state, the control unit 152a may stop the voltage application to the discharge electrode 20. For example, when the duration of a fuel cut state exceeds a predetermined value, the voltage application to the discharge electrode may be stopped.

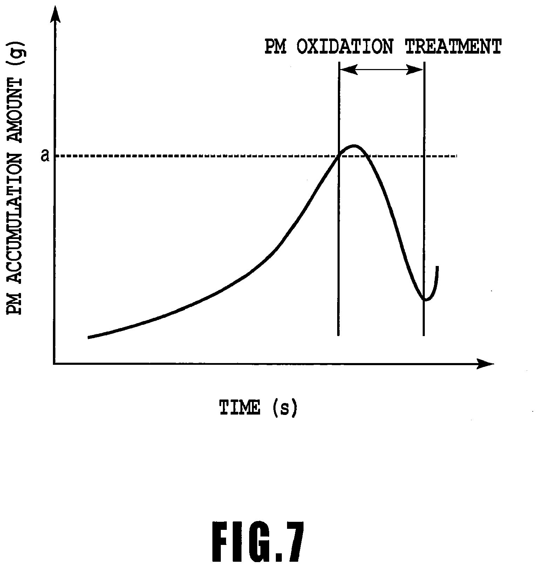

The treatment apparatus 18 operates to oxidize the PM when a PM accumulation amount exceeds a predetermined amount "a". The PM accumulation amount as used herein corresponds to the amount of particulate matter collected inside the exhaust pipe 12 by the action of the flow generating apparatus 16. As conceptually illustrated in Fig. 7, the PM accumulation amount typically increases over time. When the estimated PM accumulation amount exceeds the predetermined amount "a", the control unit 152a of the control apparatus 152 actuates the second voltage generating apparatus 34 to apply a voltage to the central electrode 30d of the discharge member 30. Consequently, the PM can be oxidized. Fig. 7 illustrates increases and decreases in PM accumulation amount resulting from the PM oxidation treatment.

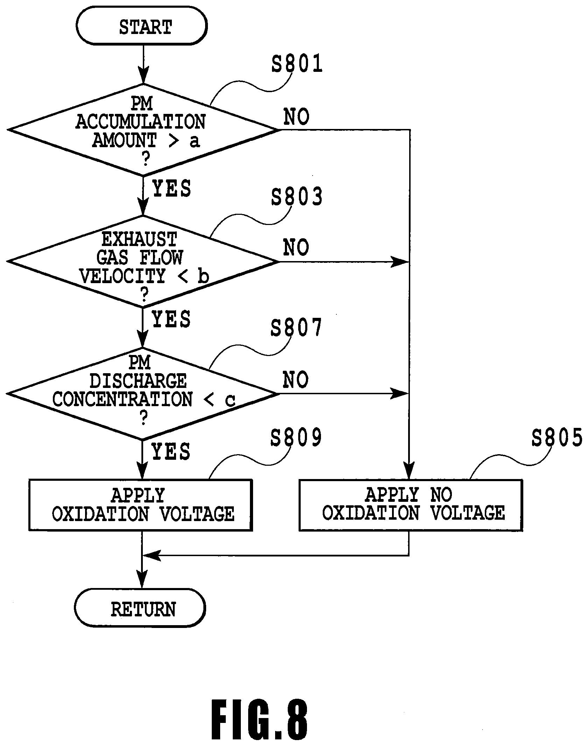

The PM oxidation treatment will further be described based on Fig. 8. A flowchart in Fig. 8 is repeated at a period of a predetermined time.

Step S801 determines whether or not the PM accumulation amount exceeds the predetermined amount "a". The PM accumulation amount is estimated (detected) based on the history of the operating state detected based on the outputs from the engine rotation speed sensor 154 and the engine load sensor 156. The estimation is performed by a part of the control unit 152b of the control apparatus 152 that corresponds to an estimation unit. The control unit 152b estimates the PM accumulation amount based on such a trend as illustrated in Fig. 7. More specifically, the control unit 152b has data or an arithmetic expression indicative of such a trend as illustrated in Fig. 7 and can estimate the PM accumulation amount based on at least one of the data and the arithmetic expression and the outputs from the engine rotation speed sensor 154 and the engine load sensor 156. The PM accumulation amount is estimated also taking into account a reduction in PM amount resulting from the voltage application in step S809 described below. The PM accumulation amount may be estimated using another method. When an affirmative determination is made in step S801 because the PM accumulation amount exceeds the predetermined amount "a", this routine proceeds to step S803. On the other hand, when a negative determination is made in step S801, the routine proceeds to step S805 where the treatment apparatus 18 does not perform the voltage application for PM oxidation.

Step S803 determines whether the flow velocity of the exhaust gas is lower than a predetermined velocity "b". The flow velocity of the exhaust gas is detected based on an output from the flow rate sensor 158. The flow rate detection is performed by a part of the control unit 152b of the control apparatus 152 that corresponds to a flow rate detecting unit. Since the flow velocity of the exhaust gas is lower than the predetermined velocity "b", an affirmative determination in step S803 allows the routine to proceed to step S807, and otherwise the routine proceeds to step S805.

Step S807 determines whether or not the concentration of the PM in the exhaust gas (PM discharge concentration) is lower than a predetermined concentration "c". The PM discharge concentration is detected based on the operating state detected based on the outputs from the engine rotation speed sensor 154 and the engine load sensor 156. The PM concentration detection is performed by a part of the control unit 152b of the control apparatus 152 that corresponds to a PM concentration detecting unit. Since the PM discharge concentration is lower than a predetermined concentration "c", an affirmative determination in step S807 allows the routine to proceed to step S809, and otherwise the routine proceeds to step S805.

In step S809, the treatment apparatus 18 performs the voltage application for PM oxidation. Consequently, the accumulated PM can be treated. The voltage application is performed by a part of the control unit 152b of the control apparatus 152 that corresponds to an execution unit. As described above, in the present embodiment, the treatment of the PM is performed in a desired operating state where an affirmative determination is made both in step S803 and in step S807 (for example, during an idle operation). When an affirmative determination is made both in step S803 and in step S807, even if a voltage is applied to the central electrode 30d of the discharge member 30 of the treatment apparatus 18 to cause an ion flow, the low flow velocity of the exhaust gas allows substantial avoidance of a downstream flow of PM flying from the treatment section. Moreover, even when such an ion flow occurs, the PM discharge concentration is low, allowing the amount of PM discharged downstream to be sufficiently reduced by dust collection executed in the remaining treatment section not performing the voltage application. The voltage application performed in the treatment apparatus 18 in step S809 lasts a predetermined time. The period of the PM oxidation treatment in Fig. 7 corresponds to the predetermined time. For example, the predetermined time may be set based on the applied voltage and the PM accumulation amount (or the predetermined amount "a"). The duration of the voltage application in the treatment apparatus 18 may be constant or variable.

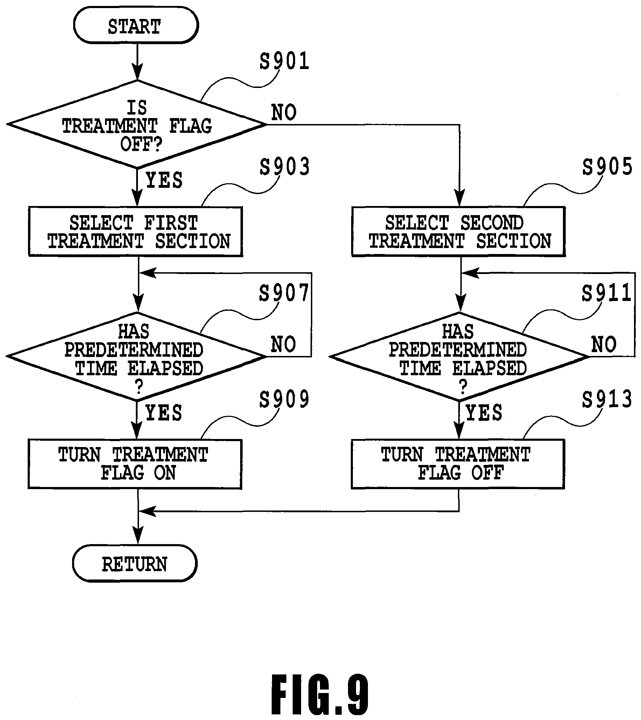

Now, the switching control of the two treatment sections of the treatment apparatus 18 will be described based on Fig. 9. A flowchart in Fig. 9 is repeated while the voltage application is being performed in step S809 in the flow in Fig. 8.

Step S901 determines whether or not a treatment flag is OFF. The treatment flag is set to OFF in an initial state, and an ON state or an OFF state remains unchanged from the stoppage to the start of the engine. Since the treatment flag is OFF, an affirmative determination allows the routine to proceed to step S903, and otherwise the routine proceeds to step S905.

In step S903, the first treatment section 32A is selected. Thus, a control unit 152c of the control apparatus 152 that serves as a selection unit actuates the switching apparatus 36 so as to connect the first treatment section 32A to the second voltage generating apparatus 34. Subsequent step S907 determines whether or not a predetermined time has elapsed. The predetermined time is specified as a constant time herein but may be variable. The predetermined time in step S907 is shorter than the duration of the voltage application in step S809 and is preferably equal to or shorter than the half of the duration of the voltage application. When the predetermined time is determined to have elapsed in step S907, the treatment flag in step S909 is turned on, thus ending the routine.

When a negative determination is made in step S901 because the treatment flag is ON, the second treatment section 32B is selected in step S905. Thus, the selection unit of the control apparatus 152 actuates the switching apparatus 36 so as to connect the second treatment section 32B to the second voltage generating apparatus 34. Then, subsequent step S911 determines whether or not a predetermined time has elapsed. The predetermined time in step S911 is the same as the predetermined time in step S907 but may be different from the predetermined time in step S907. When the predetermined time is determined to have elapsed in step S911, the treatment flag is turned off in step S913, thus ending the routine.

As described above, the treatment sections are sequentially switched. Therefore, when the treatment apparatus 18 performs the voltage application, accumulation of the PM in one of the treatment sections and oxidation of the PM in the other treatment section can be concurrently executed.

In the first and second embodiments, the switching apparatus 36 is operated such that the voltage application in the first treatment section is performed while the voltage application is not being executed in the second treatment section and such that the voltage application in the second treatment section is performed while the voltage application is not being executed in the first treatment section. However, the present invention permits such a different switching control pattern as allows the voltage application in the first treatment section to be performed while the voltage application is not being executed in the second treatment section. For example, the duration of the voltage application in the first treatment section may partly overlap the duration of the voltage application in the second treatment section. In this case, the second voltage generating apparatus 34 and the switching apparatus 36 are configured to enable such voltage applications.

In the second embodiment, when the engine 150 is stopped, the operation of the treatment apparatus 18 is also stopped. However, after the engine 150 is stopped, the treatment apparatus 18 may be operated for a predetermined time. Thus, the PM in the exhaust passage can be more appropriately treated. For example, the duration of operation of the treatment apparatus 18 after the stoppage of the engine is variable and can be determined according to a remaining battery level.

The embodiments of the present invention have been described, but further embodiments of the present invention are possible. For example, independent voltage generating apparatuses may be provided for the first treatment section and for the second treatment section. Moreover, as described above, in addition to the use, for PM treatment, of the oxidation promoting component resulting from the operation of the treatment apparatus, the use of a heater for PM treatment as in the apparatus in Japanese Patent Laid-Open No. 2009-127442 may be further used.

The above-described embodiments and configurations may be optionally combined together without inconsistencies. The embodiments of the present invention include any modifications, applications, and equivalents encompassed by the concepts of the present invention defined by the claims. Therefore, the present invention should not be interpreted in a limited manner but is applicable to any other techniques belonging to the scope of the concepts of the present invention.

## Claims

1. An exhaust gas purification apparatus (10, 110) comprising:
a flow generating apparatus (16) comprising a discharge electrode (20) arranged inside a tubular outer casing (12) forming a passage for exhaust gas containing particulate matter, the discharge electrode being configured to cause a flow from the discharge electrode toward the outer casing as a result of voltage application; and
a treatment apparatus (18) comprising discharge members (30) arranged between the discharge electrode of the flow generating apparatus and the outer casing, the discharge member comprising a first electrode (30d) at least partly covered by a dielectric member (30e), the treatment apparatus being configured such that, when a voltage is applied to the first electrode, an oxidation promoting component is generated outside the dielectric member in the outer casing; wherein
the treatment apparatus includes a plurality of treatment sections (32A, 32B), each of the treatment sections includes at least one discharge member, and
the treatment apparatus is configured to perform the voltage application on the discharge member in a first treatment section (32A) of the plurality of treatment sections and not perform the voltage application on the discharge member in a second treatment section (32B) of the plurality of treatment sections.

2. The exhaust gas purification apparatus according to claim 1, wherein
the outer casing is at least partly electrically conductive,
the flow generating apparatus is configured to cause a potential difference between the discharge electrode and the outer casing as a result of voltage application, and
the treatment apparatus is configured to cause a potential difference between the first electrode and the outer casing as a result of voltage application.

3. The exhaust gas purification apparatus according to any one of claims 1 or 2, wherein the discharge member includes a member with at least one of a moisture retaining function and a PM capturing function, outside the dielectric member.

4. The exhaust gas purification apparatus according to any one of claims 1 to 3, wherein the discharge member includes a fibrous member provided on an outer surface of the dielectric member.

5. The exhaust gas purification apparatus according to claim 4, wherein the fibrous member has such directionality as to direct, in a predetermined direction, ion wind generated outside the dielectric member as a result of voltage application in the treatment apparatus.

6. The exhaust gas purification apparatus according to claim 5, wherein
the fibrous member of the first treatment section is configured so as to at least direct the ion wind toward the second treatment section side adjacent to the first treatment section as a result of voltage application in the first treatment section, while the fibrous member of the second treatment section is configured so as to at least direct the ion wind toward the first treatment section side as a result of voltage application in the second treatment section.

7. The exhaust gas purification apparatus according to any one of claims 1 to 6, wherein
a control unit that controls the voltage application in the treatment apparatus includes:
an estimation unit that estimates the amount of particulate matter collected inside the outer casing by action of the flow generating apparatus; and
an execution unit that performs the voltage application when the amount of particulate matter estimated by the estimation section exceeds a threshold.

8. The exhaust gas purification apparatus according to claim 7, wherein the exhaust gas purification apparatus is applied to an internal combustion engine, and the control unit performs the voltage application when exhaust gas has a flow velocity lower than a predetermined flow velocity and when the particulate matter in the exhaust gas has a concentration lower than a predetermined concentration.

## Patentansprüche

1. Abgasreinigungsapparat (10, 110), der aufweist:
einen Strömungserzeugungsapparat (16), der eine Abgabeelektrode (20) aufweist, die im Inneren eines röhrenförmigen Außengehäuses (12) angeordnet ist, das einen Durchgang für Abgas, das Feinstaub enthält, bildet, wobei die Abgabeelektrode konfiguriert ist, um eine Strömung von der Abgabeelektrode hin zu dem Außengehäuse als Folge einer Spannungsanlegung zu verursachen, und
einen Behandlungsapparat (18), der Abgabeglieder (30), die zwischen der Abgabeelektrode des Strömungserzeugungsapparats und dem Außengehäuse angeordnet sind, aufweist, wobei das Abgabeglied eine erste Elektrode (30d), die zumindest teilweise durch ein dielektrisches Glied (30e) bedeckt ist, aufweist, wobei der Behandlungsapparat derart konfiguriert ist, dass, wenn eine Spannung an die erste Elektrode angelegt wird, eine oxidationsfördernde Komponente außerhalb des dielektrischen Glieds in dem Außengehäuse erzeugt wird, wobei
der Behandlungsapparat eine Vielzahl von Behandlungsabschnitten (32A, 32B) enthält, wobei jeder der Behandlungsabschnitte mindestens ein Abgabeglied enthält, und
der Behandlungsapparat konfiguriert ist, um die Spannungsanlegung an das Abgabeglied in einem ersten Behandlungsabschnitt (32A) der Vielzahl von Behandlungsabschnitten durchzuführen und die Spannungsanlegung an das Abgabeglied in einem zweiten Behandlungsabschnitt (32B) der Vielzahl von Behandlungsabschnitten nicht durchzuführen.

2. Abgasreinigungsapparat gemäß Anspruch 1, wobei
das Außengehäuse zumindest teilweise elektrisch leitend ist,
der Strömungserzeugungsapparat konfiguriert ist, um eine Potentialdifferenz zwischen der Abgabeelektrode und dem Außengehäuse als Folge einer Spannungsanlegung zu verursachen, und
der Behandlungsapparat konfiguriert ist, um eine Potentialdifferenz zwischen der ersten Elektrode und dem Außengehäuse als Folge einer Spannungsanlegung zu verursachen.

3. Abgasreinigungsapparat gemäß einem der Ansprüche 1 oder 2, wobei das Abgabeglied ein Glied mit mindestens einer der Funktionen, Feuchtigkeitszurückhaltefunktion und PM-Einfangfunktion, außerhalb des dielektrischen Glieds enthält.

4. Abgasreinigungsapparat gemäß einem der Ansprüche 1 bis 3, wobei das Abgabeglied ein faseriges Glied, das auf einer Außenfläche des dielektrischen Glieds bereitgestellt ist, enthält.

5. Abgasreinigungsapparat gemäß Anspruch 4, wobei das faserige Glied solch eine Richtungsabhängigkeit hat, um in eine vorgegebene Richtung einen lonenwind zu leiten, der außerhalb des dielektrischen Glieds als Folge einer Spannungsanlegung in dem Behandlungsapparat erzeugt wird.

6. Abgasreinigungsapparat gemäß Anspruch 5, wobei
das faserige Glied des ersten Behandlungsabschnitts konfiguriert ist, um zumindest den lonenwind hin zu der Seite des zweiten Behandlungsabschnitts, der benachbart zu dem ersten Behandlungsabschnitt ist, als Folge einer Spannungsanlegung in dem ersten Behandlungsabschnitt zu leiten, während das faserige Glied des zweiten Behandlungsabschnitts konfiguriert ist, um zumindest den lonenwind hin zu der Seite des ersten Behandlungsabschnitts als Folge einer Spannungsanlegung in dem zweiten Behandlungsabschnitt zu leiten.

7. Abgasreinigungsapparat gemäß einem der Ansprüche 1 bis 6, wobei
eine Steuerungseinheit, die die Spannungsanlegung in dem Behandlungsapparat steuert, enthält:
eine Schätzungseinheit, die die Menge von Feinstaub, die sich im Inneren des Außengehäuses durch eine Tätigkeit des Strömungserzeugungsapparats gesammelt hat, schätzt, und
eine Ausführungseinheit, die die Spannungsanlegung durchführt, wenn die Menge von Feinstaub, die durch den Schätzungsabschnitt geschätzt wird, einen Schwellenwert übersteigt.

8. Abgasreinigungsapparat gemäß Anspruch 7, wobei der Abgasreinigungsapparat auf einen Verbrennungsmotor angewendet wird und die Steuerungseinheit die Spannungsanlegung durchführt, wenn Abgas eine Strömungsgeschwindigkeit hat, die niedriger als eine vorgegebene Strömungsgeschwindigkeit ist, und wenn der Feinstaub in dem Abgas eine Konzentration hat, die niedriger als eine vorgegebene Konzentration ist.

## Revendications

1. Appareil de purification de gaz d'échappement (10, 110) comprenant :
un appareil de génération d'écoulement (16) comprenant une électrode de décharge (20) disposée à l'intérieur d'une enveloppe extérieure tubulaire (12) formant un passage pour des gaz d'échappement contenant des matières particulaires, l'électrode de décharge étant conçue pour provoquer un écoulement de l'électrode de décharge vers l'enveloppe extérieure, par suite de l'application d'une tension ; et
un appareil de traitement (18) comprenant des éléments de décharge (30) disposés entre l'électrode de décharge de l'appareil de génération d'écoulement et l'enveloppe extérieure, l'élément de décharge comprenant une première électrode (30d) au moins en partie recouverte d'un élément diélectrique (30e), l'appareil de traitement étant conçu de manière que, lorsqu'une tension est appliquée à la première électrode, un composant favorisant l'oxydation est produit à l'extérieur de l'élément diélectrique dans l'enveloppe extérieure ; dans lequel :
l'appareil de traitement comporte une pluralité de sections de traitement (32A, 32B), chacune des sections de traitement comporte au moins un élément de décharge, et
l'appareil de traitement est conçu pour procéder à l'application d'une tension à l'élément de décharge dans une première section de traitement (32A) de la pluralité de sections de traitement et pour ne pas procéder à l'application d'une tension à l'élément de décharge dans une seconde section de traitement (32B) de la pluralité de sections de traitement.

2. Appareil de purification de gaz d'échappement, selon la revendication 1, dans lequel :
l'enveloppe extérieure est au moins en partie électroconductrice,
l'appareil de génération d'écoulement est conçu pour provoquer une différence de potentiel entre l'électrode de décharge et l'enveloppe extérieure, par suite de l'application d'une tension, et
l'appareil de traitement est conçu pour provoquer une différence de potentiel entre la première électrode et l'enveloppe extérieure, par suite de l'application d'une tension.

3. Appareil de purification de gaz d'échappement selon l'une quelconque des revendications 1 et 2, dans lequel l'élément de décharge inclut un élément possédant soit une fonction de rétention d'humidité soit une fonction de capture de matières particulaires, à l'extérieur de l'élément diélectrique.

4. Appareil de purification de gaz d'échappement selon l'une quelconque des revendications 1 à 3, dans lequel l'élément de décharge comporte un élément fibreux placé sur une surface extérieure de l'élément diélectrique.

5. Appareil de purification de gaz d'échappement, selon la revendication 4, dans lequel l'élément fibreux a une orientation telle qu'il dirige, dans une direction prédéterminée, un vent ionique engendré à l'extérieur de l'élément diélectrique, par suite de l'application d'une tension dans l'appareil de traitement.

6. Appareil de purification de gaz d'échappement, selon la revendication 5, dans lequel :
l'élément fibreux de la première section de traitement est conçu de manière au moins à diriger le vent ionique vers le côté seconde section de traitement, voisin de la première section de traitement, par suite de l'application d'une tension dans la première section de traitement, tandis que l'élément fibreux de la seconde section de traitement est conçu de manière au moins à diriger le vent ionique vers le côté première section de traitement, par suite de l'application d'une tension dans la seconde section de traitement.

7. Appareil de purification de gaz d'échappement selon l'une quelconque des revendications 1 à 6, dans lequel :
une unité de commande qui commande l'application d'une tension dans l'appareil de traitement comporte :
une unité d'estimation qui estime la quantité de matières particulaires collectées à l'intérieur de l'enveloppe extérieure sous l'action de l'appareil de génération d'écoulement ; et
une unité d'exécution qui procède à l'application d'une tension lorsque la quantité de matières particulaires estimée par la section d'estimation dépasse un seuil.

8. Appareil de purification de gaz d'échappement selon la revendication 7, dans lequel l'appareil de purification de gaz d'échappement est appliqué à un moteur à combustion interne, et l'unité de commande procède à l'application d'une tension lorsque le gaz d'échappement a une vitesse d'écoulement inférieure à une vitesse d'écoulement prédéterminée, et lorsque les matières particulaires dans le gaz d'échappement ont une concentration inférieure à une concentration prédéterminée.
